(19) Europäisches Patentamt / European Patent Office / Office européen des brevets

(11) **EP 3 523 059 B1**

(12) **FASCICULE DE BREVET EUROPEEN**

(45) Date de publication et mention de la délivrance du brevet:
**22.07.2020 Bulletin 2020/30**

(21) Numéro de dépôt: **17777289.4**

(22) Date de dépôt: **04.10.2017**

(51) Int Cl.:
**B09B 3/00** *(2006.01)* **B09C 1/08** *(2006.01)*
**C04B 28/06** *(2006.01)* **C04B 7/32** *(2006.01)*
**C04B 111/00** *(2006.01)*

(86) Numéro de dépôt international:
**PCT/EP2017/075156**

(87) Numéro de publication internationale:
**WO 2018/065447 (12.04.2018 Gazette 2018/15)**

(54) **PROCÉDÉ DE TRAITEMENT DE SOL POLLUÉ PAR UN LIANT HYDRAULIQUE À PHASE MAYENITE**

VERFAHREN ZUR BEHANDLUNG VON VERUNREINIGTEM BODEN DURCH EIN HYDRAULISCHES BINDEMITTEL MIT MAYENIT-PHASE

METHOD FOR TREATING POLLUTED SOIL BY A HYDRAULIC BINDER WITH MAYENITE PHASE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **04.10.2016 FR 1659573**

(43) Date de publication de la demande:
**14.08.2019 Bulletin 2019/33**

(73) Titulaire: **Holcim Technology Ltd**
**6300 Zug (CH)**

(72) Inventeurs:
• **TAPSOBA, Nouffou**
**5113 Holderbank (CH)**
• **BROUARD, Eric**
**5113 Holderbank (CH)**
• **COMPARET, Cédric**
**5113 Holderbank (CH)**
• **ECH, Mohsen**
**5113 Holderbank (CH)**
• **RICHARD, Nicolas**
**5113 Holderbank (CH)**
• **LEVY, Christophe**
**5113 Holderbank (CH)**

(74) Mandataire: **Regimbeau**
**20, rue de Chazelles**
**75847 Paris Cedex 17 (FR)**

(56) Documents cités:
**JP-A- H10 279 937 JP-A- 2006 272 144**
**US-A1- 2015 158 063**

**Description**

La présente invention concerne un procédé de traitement de sol pollué au moyen d'un liant hydraulique contenant majoritairement de la Mayenite (C12A7), et son utilisation dans le cadre du traitement de sols pollués.

La présente invention a pour objet un liant hydraulique contenant pour l'essentiel un aluminate de calcium anhydre, la Mayenite de formule $12CaO.7Al_2O_3$ (C12A7 en notation cimentière) et de la chaux vive (CaO) ou hydratée ($Ca(OH)_2$). La présente invention a également pour objet l'utilisation de ce liant pour le traitement d'un matériau, notamment d'un sol ou d'une terre, polluée ou contaminée par des espèces chimiques ioniques ou des métaux lourds. Le matériau traité reste meuble mais la lixiviation des espèces polluantes est réduite, y compris à long terme.

La dépollution des sols est une demande croissante et s'accompagne d'enjeux forts en termes de santé publique et de protection de l'environnement.

Le relargage des polluants solubles suite à leur contact avec l'eau expose à un risque de pollution potentiel important pour l'environnement lors du stockage court terme ou définitif, ou la réutilisation des sols contaminés.

Pour limiter ce risque, la mise en décharge de sols contaminés nécessite au préalable d'abaisser la classe de dangerosité de ces sols.

Abaisser la classe de dangerosité peut également permettre de réemployer les sols ainsi traités, par exemple dans des sous couches routières ou dans des remblais.

Abaisser la classe de dangerosité de sols contaminés revient à abaisser le taux d'agents polluants lixiviables dans l'eau.

Des liants hydrauliques sont déjà utilisés pour le traitement de déchets ou sols contaminés.

Les polluants anioniques, tel que les sulfates, ou les métaux lourds, présents dans le sol contaminé, peuvent être piégés durant le processus d'hydratation d'un liant hydraulique mélangé au sol à traiter et à de l'eau. Ces éléments peuvent être piégés dans des hydrates de type C-S-H (silicate de calcium hydraté) ou sulfoalumineux de type ettringite ou monosulfoaluminates de calcium. Certains éléments peuvent aussi être stabilisés sous forme d'hydroxydes.

La demande JP H10 279937 décrit l'utilisation d'un liant hydraulique pour traiter les sols pollués comprenant a) 88-94% en poids d'un clinker Portland et b) 6-25% en poids d'un mélange de C12A7, aluminate de sodium, carbonate de sodium, chaux éteinte et sulfate de sodium.

La demande US 2015/0158063 décrit également l'utilisation d'un liant hydraulique pour traiter les sols pollués. Le liant comprend un clinker avec des phases ye'elimite (C4A3$), mayenite (C12A7), optionnellement bélite (C2S) et de la chaux libre.

Dans la demande EP 0 588 689, la société Kerneos décrit l'utilisation de liants comprenant de l'alumine active pour le traitement des résidus d'incinération de déchets urbains. Les phases minéralogiques majoritaires de ces ciments alumineux sont CA ou CA et C12A7 ou C3A et C12A7.

Dans ces liants, la fixation des sulfates repose sur la formation de sulfoaluminate de calcium hydratés, principalement de l'ettringite. Toutefois, ces liants apportent eux même des sulfates ou leur réactivité reste limitée ce qui limite la fixation rapide et importante d'ions sulfates.

L'invention vise à proposer un liant hydraulique permettant de piéger rapidement et en quantité importante les anions tels que les ions sulfate et/ou les métaux lourds et permettant ainsi de traiter les sols contaminés avec de tels polluants, en limitant par ailleurs leur lixiviation. Les quantités de liant ajouté peuvent être faibles, ce qui permet par ailleurs de réduire le coût du traitement par rapport aux liants et aux procédés de mise en œuvre de l'art antérieur.

L'invention vise également à proposer un liant hydraulique permettant le traitement et l'inertage d'un sol pollué en une seule étape et *in situ,* c'est-à-dire ne nécessitant pas le transfert sur un autre lieu.

Ces objectifs sont atteints grâce à l'utilisation d'un liant hydraulique comprenant une large proportion d'aluminate de calcium de type Mayenite C12A7 et de chaux vive ou hydratée. La proportion d'alumine et de calcium apportés par le liant optimise la formation et la stabilisation d'ettringite.

Dans le langage cimentier, les composés primaires sont représentés par C pour CaO, S pour $SiO_2$, A pour $Al_2O_3$, $ pour $SO_3$, F pour $Fe_2O_3$, qui seront utilisés dans l'ensemble du présent texte, sauf indication contraire.

La mayenite est un aluminate de calcium anhydre de formule $12CaO.7Al_2O_3$ (ci-après dénommé "C12A7") et présente une structure cristalline composée de vides liés de manière tridimensionnelle (cages) comprenant des « ions oxygène libre ». Ces ions oxygène libre peuvent être substitués par des anions, à température ambiante. Ainsi, au sens de la présente invention, la phase C12A7 englobe toute structure isotype de C12A7, comme par exemple $C11A7.CaF_2$ (F désigne ici le fluor) dont la structure résulte d'une substitution d'ions $O^{2-}$ par des ions $F^-$. Dans la suite de la description, par C12A7, il faut comprendre C12A7 ou toute structure isotype notamment $C11A7.CaF_2$ (F désigne ici le fluor) et $C11A7.CaCl_2$.

Grâce à la grande réactivité du liant et la vitesse de formation de l'ettringite les polluants sont rapidement stabilisés en quantités importantes. Par ailleurs, grâce à la rapidité de consommation des polluants les cadences de traitements des sols dépollués est plus rapide qu'avec les autres liants cités précédemment. Un des mécanismes supposé est la teneur élevée du liant en C12A7 et l'absence de sulfate tel que décrit plus haut.

Les polluants anioniques, tel que les sulfates, ou les métaux lourds, présents dans le sol contaminé, sont piégés chimiquement dans des trisulfoaluminates de calcium hydratés qui résultent de l'hydratation du liant hydraulique de l'invention mélangé en présence des sulfates au sol et d'eau. A température ambiante, ces phases sont thermodynamiquement stables, les polluants, et notamment les sulfates, sont ainsi durablement piégés et les risques de lixiviation significativement réduits.

L'invention a pour objet un procédé de traitement de sols pollués, notamment de sols pollués par des anions, tels que des ions sulfate, et/ou des métaux lourds, comprenant le mélange dudit sol avec un liant hydraulique, caractérisé en ce que le liant hydraulique comprend :

- A titre de seul clinker alumineux, un clinker alumineux comprenant plus de 80 % massique de phase Mayenite C12A7 ou d'un isotype de Mayenite ;
- De 1 à 30% en poids, par rapport au poids total du liant, de chaux vive ou hydratée.

Un « clinker alumineux » est un clinker comprenant au moins une phase choisie parmi C3A, CA, C12A7, C11A7CaF2, C4A3$ (yée lemite), C2A(1-x)Fx (avec x appartient à ]0,1]), des phases amorphes hydrauliques présentant un ratio molaire C/A compris entre 0,3 et 15 et tels que les teneurs cumulées en Al2O3 de ces phases soient comprises entre 3 et 70% en poids total du liant hydraulique, préférentiellement entre 7 et 50% en poids et mieux entre 20 et 30% en poids. Dans le cadre de l'invention, le clinker alumineux comprend plus de 80 % massique de phase Mayenite C12A7 ou d'un isotype de Mayenite.

Avantageusement, le clinker alumineux de l'invention comprend comme seule phase aluminate la phase Mayenite C12A7.

Le clinker alumineux de l'invention comprend avantageusement plus de 85 % massique de phase Mayenite, plus avantageusement plus de 90 % massique de phase Mayenite, encore plus avantageusement plus de 95 % massique de phase Mayenite.

Le clinker alumineux de l'invention peut comprendre jusqu'à 99% massique de phase Mayenite, voire 100% massique. Des clinkers plus riches en C12A7, permettent de former une plus grande quantité d'ettringite.

Le clinker alumineux de l'invention est obtenu par fusion ou frittage entre 1250 et 1300°C environ d'un mélange de bauxite blanche et de calcaire. Des taux faibles de silice et de fer des matières premières permettent de garantir un taux optimal de C12A7. Avantageusement, la teneur cumulée en fer et silice doivent être inférieures à 30%, encore plus avantageusement inférieure à 20%, en poids par rapport au poids total des matières premières.

Le liant hydraulique comprend avantageusement majoritairement, en poids, le clinker alumineux de l'invention. Ce clinker représente avantageusement au moins 70% en poids du poids total du liant, plus avantageusement au moins 75% en poids. Le taux de C12A7 peut varier entre 60% et 90% en poids dans le liant, plus avantageusement entre 65% et 90% en poids, encore plus avantageusement entre 70% et 90%, encore plus avantageusement entre 75% et 90% en poids, encore plus avantageusement entre 80% et 90% en poids.

Le liant hydraulique de l'invention comprend également de la chaux. Cette chaux peut être de la chaux libre (CaO), de la chaux éteinte (Ca(OH)₂), ou un mélange de chaux libre et de chaux éteinte en toutes proportions. Dans un mode de réalisation, la chaux est de la chaux éteinte.

Le liant hydraulique de l'invention peut être réalisé par broyage séparé et ensuite mélange du clinker alumineux et de la chaux vive ou hydratée, ou par co-broyage de tous les constituants.

L'ajout de chaux au liant hydraulique permet d'améliorer le piégeage des polluants, y compris dans le temps.

Dans un mode de réalisation, le liant hydraulique de l'invention comprend avantageusement de 5 à 25% en poids, par rapport au poids total du liant, de chaux vive ou hydratée.

De manière avantageuse, le liant hydraulique de l'invention a un ratio massique C12A7/CaO allant de 65/35 à 99/1, plus avantageusement de 65/35 à 90/10, encore plus avantageusement de 85/15.

Dans un autre mode de réalisation, le liant hydraulique de l'invention comprend avantageusement de 10 à 25% en poids, par rapport au poids total du liant, de chaux vive ou hydratée.

Le liant hydraulique de l'invention peut par ailleurs également contenir des accélérateurs de prise connus des ciments alumineux. On peut notamment citer les sels de lithium solubles, tel que le nitrate de lithium, le chlorure de lithium ou l'hydroxyde de lithium, ou leurs mélanges. Des composés organiques hydroxylés tels que ceux cité dans le brevet US3826665 peuvent aussi être utilisés.

Dans un mode de réalisation préféré de l'invention, le liant hydraulique comprend uniquement le clinker alumineux de l'invention et la chaux vive ou éteinte.

Le liant hydraulique peut être broyé et/ou séparé de la chaux afin d'obtenir un liant ayant une surface spécifique Blaine de comprise entre 2500 cm²/g et 5000 cm²/g.

Le procédé de traitement du sol avec ledit liant hydraulique permet de créer rapidement des espèces chimiques stables, au sein du sol pollué. Le sol ainsi traité reste facilement manipulable (pelletable, transportable). Le traitement ne nécessite pas de manipulations lourdes d'un point de vue logistique ; c'est-à-dire qu'il ne nécessite pas de transport de grand volume de matériaux (sol ou liant), pas d'infrastructures spéciales. Le traitement proposé est simple à mettre en œuvre, économiquement avantageux et écologiquement intéressant.

Le procédé selon l'invention comprend avantageusement le mélange dudit sol avec ledit liant hydraulique dans des proportions massiques sol/liant comprises entre 1 et 10 parties de liant pour 100 parties de sol, plus avantageusement comprises entre 3 et 7 parties de liant pour 100 parties de sol.

Pour optimiser la formation d'ettringite dans le matériau à traiter, le liant doit être uniformément réparti et la quantité d'eau dans le sol à traiter suffisante pour optimiser la formation d'ettringite. Ceci se traduit en pratique par une teneur en eau qui peut être comprise entre 5% et 40% en poids, plus avantageusement 15% et 40%, par rapport au poids du sol, en fonction de sa nature. En cas de besoin, de l'eau peut être ajoutée au sol. Les quantités en eau doivent être suffisantes pour permettre la réaction d'hydratation, et pourront facilement être déterminées par l'homme du métier.

Les sols contaminés sont avantageusement des sols contaminés par des quantités importantes de sulfates.

Le procédé selon la présente invention peut avantageusement être utilisé pour la stabilisation de sols *in situ* ou avant mise en stockage, de sols pollués notamment par des anions sulfate et/ou des cations de métaux lourds.

**Protocoles expérimentaux** :

Analyse minéralogique d'un clinker :

L'analyse minéralogique quantitative d'un clinker est réalisée par analyse Rietveld du spectre de diffraction des rayons X de ce clinker. L'échantillon de clinker à analyser est finement broyé pour fournir un échantillon dont toutes les particules passent à travers un tamis dont les mailles font 63 $\mu$m. Les spectres de diffraction aux rayons X de référence des phases cristallines présentes dans l'échantillon à analyser (à l'exception de la phase vitreuse qui n'a pas de spectre bien défini) sont obtenus à partir d'échantillons purs de ces phases.

Essais de lixiviation

Les essais ont tous été conduits selon les recommandations de la norme NF EN-12457-2, décembre 2002. Les essais sont effectués sur un matériau dont au moins 95% des particules (en masse) ont une taille inférieure à 4 mm. Pour les analyses et les tests de lixiviation, la masse de matière sèche (MS) de l'échantillon est déterminée après passage à l'étuve à 105°C $\pm$ 5°C jusqu'à poids constant conformément à la norme ISO 11465, août 1994.

A partir de l'échantillon pour essai, on prépare une prise d'essai d'une masse totale humide contenant exactement 0,090 kg $\pm$ 0,005 kg (mesurés avec une précision de 0,1 g) de matière sèche.

L'essai de lixiviation est réalisé à température ambiante soit 20°C $\pm$ 5°C.

On place dans un flacon la prise d'essai humide d'une masse totale correspondant à 0,090 kg $\pm$ 0,005 kg de matière sèche puis on ajoute une quantité de lixiviant (eau distillée, eau déminéralisée, eau déionisée ou eau de pureté équivalente ayant un pH compris entre 5 et 7,5, de conductivité inférieur à 0,5 mS/m) permettant d'obtenir un rapport liquide-solide de 10 L/kg $\pm$ 2%. Le flacon bouché est placé dans un dispositif d'agitation (tel que défini dans la norme) est agité à environ 10 tr/min pendant 24 heures $\pm$ 0,5 h. Pour atteindre un bon équilibre chimique entre le solide et la solution, pendant l'extraction il est important d'éviter la décantation des solides.

En plus des échantillons, des « blancs » de lixiviation sont également préparés.

Après arrêt de l'agitation, les solides en suspension sont mis à décanter pendant 15 minutes $\pm$ 5 min, puis filtrés sous vide sur un filtre à membrane de 0,45 $\mu$m.

Si la filtration est rendue trop difficile, l'éluat peut être centrifugé à 2000g pendant 30 minutes afin d'éviter le colmatage du filtre à 0,45 $\mu$m. Les conditions sont précisées dans la norme NF EN-12457-2, décembre 2002.

L'éluat est ensuite divisé en un nombre approprié de sous échantillons pour les différentes analyses chimiques et conservé selon la norme EN ISO 5667-3.

L'analyse de l'éluat produit par l'essai de lixiviation fournit la concentration des constituants dans les éluats exprimée en mg/L. Les résultats finaux sont exprimés en quantité de constituant lixivié rapportée à la masse totale de l'échantillon, en mg/kg de matière sèche.

On calcule la quantité d'un constituant lixivié à partir du matériau, sur la base de la masse sèche du matériau d'origine, à l'aide de la formule suivante :

$$A = C \times [(L / MS) + (TH / 100)] \ (1)$$

où :

A est le relargage d'un constituant pour L/S = 10 (exprimé en milligrammes par kilogramme de matière sèche) ;

C est la concentration d'un constituant particulier dans l'éluat (exprimée en milligrammes par litre);

L est le volume de lixiviant utilisé (exprimé en litres) ;

TH est le taux d'humidité, exprimé en pourcentage de la masse sèche (4.3.2) et calculé comme suit : TH = 100 × (MH-MS)/MS

MS est la masse de la prise d'essai sèche exprimée en kilogrammes

MH est la masse de la prise d'essai non séchée exprimée en kilogrammes

Analyse des anions

L'analyse des anions est réalisée par chromatographie ionique avec pour éluant des solutions à 1 mM de $NaHCO_3$ et 3,5 mM $Na_2CO_3$.

Des solutions étalons pour les ions $F^-$, $NO_2^-$, $NO_3^-$ et $Br^-$ sont préparées.

Analyse des métaux lourds

L'analyse des éléments (métaux lourds) est réalisée par analyse ICP-AES (Spectrométrie d'émission atomique couplée à un plasma induit).

Puissance RF : 1,3 kW

Débit plasmagène : 15 L/min

Débit auxiliaire : 2,25 L/min

Débit du nébuliseur : 0,8 L/min

Temps de lecture par réplique : 20 s

Les exemples suivants, non-restrictifs, illustrent des exemples de réalisation de l'invention.

Sauf indication contraire, tous les pourcentages sont des pourcentages massiques.

Dans tous les tableaux :

MS = matière sèche

ND : Non Détectable, c'est-à-dire inférieur au seuil de détection de la mesure

**Exemple 1 : Traitement de sols contaminés par différentes teneurs en sulfate avec des liants selon l'invention ou des liants comparatifs**

Le procédé de traitement de sols contaminés a été mis en œuvre avec des liants de l'invention et des liants comparatifs.

Trois matériaux à traiter ont été utilisés : deux marnes supragypseuse avec deux niveaux de pollutions et un limon de Roissy pollué avec un gypse naturel.

Une marne supragypseuse contenait une teneur en sulfate $SO_4$ de 5220 mg/kg de matière sèche, une autre supragypseuse contenait une teneur en sulfate $SO_4$ de 7000 mg/kg de matière sèche et un limon ayant une teneur en sulfate en partie apporté par un gypse naturel de 15060 mg/kg de matière sèche.

Les liants testés sont les suivants :

- Liant à base de C12A7 : liants selon l'invention
- Liant CEM I : liant comparatif à base de clinker Portland
- Liant CSA : liant comparatif à base de clinker de sulfoaluminate de calcium (CSA - Calcium Sulfo Aluminate)

Les compositions de ces liants sont décrites par la suite.

**1. Préparation des clinkers**

1.1 Clinkers selon l'invention

Le clinker alumineux est obtenu par fusion entre 1250 et 1300°C environ d'un mélange de bauxite blanche et de calcaire. Les taux de silice et de fer des matières premières doivent être les plus faibles possible pour garantir un taux optimal de C12A7.

Après cuisson, le clinker est refroidi à l'air ambiant, puis broyé pour obtenir une finesse Blaine de l'ordre de 3500 $cm^2$/g et une granulométrie inférieure à 100 μm environ. La composition minéralogique (% massiques) du clinker alumineux selon l'invention est présentée dans le tableau suivant.

Tableau 1 : composition minéralogique du clinker C12A7 à 98% de pureté en pourcentages massiques

| | |
|---|---|
| C3S (notation cimentière) | ND |
| C2S (notation cimentière) | ND |
| C3A (notation cimentière) | ND |
| C4AF (notation cimentière) | ND |
| C4A3$ (notation cimentière) | ND |
| C12A7 (notation cimentière) | 98 |
| S (notation cimentière) | ND |
| MgO | ND |
| C2AS (notation cimentière) | ND |
| $CaSO_4$ | ND |
| Ferroperovskite | ND |
| Autres phases minoritaires | 2 |

Tableau 2 : composition minéralogique du clinker C12A7 à 85% de pureté en pourcentages massiques

| | |
|---|---|
| C3S (notation cimentière) | ND |
| C2S (notation cimentière) | ND |
| C3A (notation cimentière) | ND |
| C4AF (notation cimentière) | ND |
| C4A3$ (notation cimentière) | ND |
| C12A7 (notation cimentière) | 85 |
| S (notation cimentière) | 13 |
| MgO | ND |
| C2AS (notation cimentière) | ND |
| $CaSO_4$ | ND |
| Ferroperovskite | ND |
| Autres phases minoritaires | 2 |

1.2 Clinkers des essais comparatifs

1.2.1 A titre de premier clinker comparatif, a été utilisé un clinker commercial, le CEM I 52.5 N CE CP2 NF tel que produit par la cimenterie Lafarge de Saint-Pierre-La-Cour. Ce clinker est dénommé par la suite CEM I.
Le clinker CEM I 52.5 N CE CP2 NF a une finesse Blaine de l'ordre de 3900 $cm^2$/g et une granulométrie inférieure à 100 micromètres environ.
La composition minéralogique du clinker CEM I dans le tableau suivant.

Tableau 3 : Composition chimique du clinker CEM I en pourcentages massiques

| Composant | Pourcentage massique |
|---|---|
| $SiO_2$ | 20,07 |
| $Al_2O_3$ | 4,95 |
| $Fe_2O_3$ | 2,96 |
| CaO | 63,89 |

(suite)

| Composant | Pourcentage massique |
|---|---|
| MgO | 0,89 |
| $K_2O$ | 1,06 |
| $Na_2O$ | 0,25 |
| $SO_3$ | 3,41 |
| $TiO_2$ | 0,19 |
| $Mn_2O_3$ | 0,14 |
| $P_2O_5$ | 0,27 |
| $Cr_2O_3$ | < LD |
| $ZrO_2$ | 0,02 |
| SrO | 0,02 |
| Perte au feu | 1,56 |
| LD = limite de détection | |

1.2.2 A titre de deuxième clinker comparatif, a été utilisé un clinker sulfo-alumineux comprenant environ 60% en masse de phase yeelimite. Ce clinker est dénommé par la suite CSA.

Le clinker sulfo-alumineux est préparé en deux étapes:

- préparation d'un cru comprenant un mélange de matières premières préalablement choisie de façon à ce que la composition chimique du cru corresponde à la composition chimique du clinker souhaité;
- cuisson du cru pour obtenir le clinker, dans un four qui peut être rotatif ou pas, à une température comprise entre 1100°C et 1300°C à ajuster selon la composition chimique du cru

Après cuisson, le clinker est refroidi à l'air ambiant, puis broyé pour obtenir une finesse Blaine de l'ordre de 5240 cm$^2$/g et une granulométrie inférieure à 300 micromètres environ.

La composition minéralogique du clinker CSA est présentée dans le tableau suivant.

Tableau 4 : composition minéralogique du clinker CSA en pourcentages massiques

| Phase | Pourcentage massique |
|---|---|
| C3S (notation cimentière) | ND |
| C2S (notation cimentière) | 22,7 |
| C3A (notation cimentière) | ND |
| C4AF (notation cimentière) | 1,9 |
| C4A3$ (notation cimentière) | 65,2 |
| C12A7 (notation cimentière) | 0 |
| MgO | 1,3 |
| C2AS (notation cimentière) | 1,3 |
| $CaSO_4$ | 0,8 |
| Ferroperovskite | 6,3 |
| Autres phases minoritaires | 0,2 |

On prépare ensuite 3 liants par ajout à chacun de ces liants de chaux éteinte (« Fleur de Chaux » HX80 Saint Hilaire).

## 2. Procédé de traitement

Les échantillons de sol contaminé sont traités par le procédé selon l'invention par les liants hydrauliques préparés précédemment selon le protocole suivant :

- Une quantité de sol humide équivalente à 600 g sec de sol est introduit dans un malaxeur de type Perrier.
- Nous entendons par humide, l'humidité naturelle du sol éventuellement ajustée pour optimiser l'hydratation du liant. La teneur en eau peut être comprise entre 5% et 40% du poids du sol, en fonction de sa nature.
- Le liant pour le traitement est introduit en surface puis l'ensemble est malaxé, à petite vitesse, pendant au moins 2 minutes jusqu'à l'obtention d'un mélange homogène en teinte et en texture.
- l'ensemble du matériau traité est extrait du bol puis conservé pendant 1 heure dans un sac hermétique.
- Au bout d'une heure, l'ensemble est passé sur un tamis de 4 mm. Le refus est cassé à la main ou à l'aide d'un outil afin de faire passer l'ensemble du matériau traité au tamis de 4 mm.
- L'ensemble de la matière tamisée est replacée dans le sac hermétique afin d'éviter toute dessiccation de la matière.

La maturation du sol traité est réalisée sur une durée de 2 heures, 1 jour, 7 jours ou 2 mois à température ambiante.

## 3. Résultats des essais de lixiviation

Les résultats sont reportés dans les tableaux suivants dans lesquels les pourcentages sont exprimés en poids de chacun des composants du liant par rapport au poids de matériau à traiter. Les essais ont été réalisés sur les trois types de matériaux décrits précédemment.

Tableau 5 : Teneur en sulfates dans la marne à faible teneur en sulfate traitée avec un liant selon l'invention et comparée au liant CSA + 1% $Ca(OH)_2$

| | Teneur en sulfate (mg/kg MS) | | | |
|---|---|---|---|---|
| Durée traitement | 2 heures | 1 jour | 7 jours | 2 mois |
| Témoin (non traité) Marne Supragypseuse | 5220 | 5220 | 5220 | 5220 |
| Durée traitement | 2 heures | 1 jour | 7 jours | 2 mois |
| Comparatif: 4,5% CEM 1 + 1% $Ca(OH)_2$ | 2790 | 3060 | 3180 | 2990 |
| Comparatif: 4,5% CSA + 1% $Ca(OH)_2$ | 480 | 570 | 650 | 610 |
| Invention: 3,5% C12A7 (à 98% pureté) + 0,6% $Ca(OH)_2$ | 64,7 | 62 | 51 | 97 |

Essais de lixiviation réalisés sur une marne supragypseuse à 7000 mg/kg de $SO_4$ avec différentes compositions de liant correspondant à l'invention.

Tableau 6 : Teneur en sulfates dans la marne à forte teneur en sulfate traitée avec différents liants selon l'invention

| | Teneur en sulfate (mg/kg MS) | | |
|---|---|---|---|
| Durée traitement | 2 heures | 1 jour | 7 jours |
| Témoin (non traité) Marne supragypseuse | 7000 | 7000 | 7000 |
| 0,98% C12A7 (à 85% pureté) + 0,12% $Ca(OH)_2$ | 5980 | 6143 | 5390 |
| 2,65% C12A7 (à 85% pureté) + 0,33% $Ca(OH)_2$ | 660 | 860 | 830 |
| 2,6% C12A7 (à 98% pureté) + 0,4% $Ca(OH)_2$ | 290 | 610 | 770 |
| 4,8% C12A7 (à 98% pureté) + 0,79% $Ca(OH)_2$ | 19 | 80 | 200 |
| 4,8% C12A7 (à 98% pureté) + 0,6% $Ca(OH)_2$ | 20 | 70 | 160 |

(suite)

| | Teneur en sulfate (mg/kg MS) | | |
|---|---|---|---|
| 4,8% C12A7 (à 98% pureté) + 0,05% Ca(OH)$_2$ | 30 | 100 | 210 |
| 6,1% C12A7 (à 98% pureté) + 0,92% Ca(OH)$_2$ | 30 | 40 | 100 |
| 8,8% C12A7 (à 98% pureté) + 1,19% Ca(OH)$_2$ | 20 | 20 | 30 |
| 7% C12A7 (à 98% pureté) + 3,4% Ca(OH)$_2$ | 20 | 20 | 20 |

Tableau 7 : Teneur en sulfates dans limon à teneur élevée en sulfate traitée avec différents liants selon l'invention

| | Teneur en sulfate (mg/kg MS) | | | |
|---|---|---|---|---|
| Durée traitement | 2 heures | 1 jour | 7 jours | 2 mois |
| Témoin (non traité) Limon avec ajout de gypse | 15060 | 15060 | 15060 | 15060 |
| Comparatif: 6% CEM I + 2,5% Ca(OH)$_2$ | 9610 | 9770 | 8060 | 6690 |
| Comparatif : 6% CSA + 2,5% Ca(OH)$_2$ | 650 | 1040 | 1570 | 2180 |
| Invention: 6% C12A7 (à 98% pureté) + 0,8% Ca(OH)$_2$ | 67 | 99 | 237 | 300 |

Ces résultats montrent l'efficacité du liant C12A7 + chaux dans le procédé selon l'invention : il est capable d'éliminer la quasi-totalité des sulfates présents dans le sol, que celui-ci soit contaminé à des faibles ou hautes teneurs. Par ailleurs, la quantité de liant à mettre en œuvre pour décontaminer les sols est plus faible que celle qui doit être employée avec d'autres liants classiques.

**Exemple 2** : **Influence de la concentration en chaux**

Dans cet exemple, nous avons utilisé le clinker C12A7 décrit à l'exemple 1 additionné de différentes teneurs en chaux éteinte (celle décrite à l'exemple 1). Les liants hydrauliques testés comprennent uniquement ce clinker C12A7 et cette chaux éteinte aux teneurs indiquées dans le tableau suivant.
Le procédé de traitement est identique au procédé décrit dans l'exemple 1 et le matériau à traiter utilisé est le sol pauvre en sulfates (5220 mg/kg de matière sèche) décrite dans l'exemple 1.
Les résultats sont reportés dans le tableau suivant dans lesquels les pourcentages sont exprimés en poids de chacun des composants du liant par rapport au poids de matériau à traiter.

Tableau 8: Teneur en sulfates dans la marne à faible teneur en sulfate traitée avec différents liants selon l'invention, en fonction de la teneur en chaux

| | Teneur en sulfate (mg/kg MS) | | | |
|---|---|---|---|---|
| Durée traitement | 2 heures | 1 jour | 7 jours | 2 mois |
| Témoin (non traité) | 5220 | 5220 | 5220 | 5220 |
| Comparatif: 3,5% C12A7 + 0% Ca(OH)$_2$ | 160 | 280 | 600 | 1240 |
| Invention: 3,5% C12A7 (à 98% pureté) + 0,43% Ca(OH)$_2$ | 70 | 54 | 53 | 143 |
| Invention: 3,5% C12A7 (à 98% pureté) + 0,6% Ca(OH)$_2$ | 64,7 | 62 | 51 | 97 |
| Invention: 3,5% C12A7 (à 98% pureté) + 1% Ca(OH)$_2$ | 70 | 80 | 120 | 210 |

Ces résultats montrent que l'ajout de chaux permet d'améliorer significativement l'efficacité du clinker C12A7.

**Exemple 3** : Impact du traitement sur la présence de métaux lourds dans le lixiviat.

Classiquement, le traitement avec des liants traditionnels peuvent potentiellement apporter de très faible quantité de métaux lourds lixiviable comme du chrome hexavalent (chrome VI).

La présente invention permet de limiter l'apport de tels composés dont le chrome VI. Cela est essentiellement dû à la nature des matières premières utilisées pour sa fabrication et au procédé utilisé.

L'objectif est donc de limiter l'apport de ce type de composés par le liant afin de respecter les seuils de lixiviation très faibles pour la mise en dépôts de déchets ou de matériaux traités. Pour exemple, le seuil acceptable pour considérer un matériaux inerte face à la réglementation, est situé à 0.5 mg/kg de chrome VI par rapport au matériau sec.

Les tableaux ci-dessous résument les teneurs en chrome VI trouvées suite aux essais de lixiviation sur l'ensemble des traitements présentés aux exemples précédents.

Tableau 9 : Teneur en chrome VI dans la marne supragypseuse traitée un liant selon l'invention (3,5% C12A7 à 98% pureté + 0,6% $Ca(OH)_2$) et comparée à un liant à base de CEM I et un liant à base de CSA

| | Teneur en chrome hexavalent (mg/kg MS) | | | |
|---|---|---|---|---|
| Durée traitement | 2 heures | 1 jour | 7 jours | 2 mois |
| Témoin (non traité) Marne Supragypseuse | ND | ND | ND | ND |
| Comparatif: 4,5% CEM I + 1% $Ca(OH)_2$ | 0,8 | 0,6 | 0,4 | 0,3 |
| Comparatif : 4,5% CSA + 1% $Ca(OH)_2$ | 1,8 | 2,0 | 2,2 | 2,0 |
| Invention: 3,5% C12A7 (à 98% pureté) + 0,6% $Ca(OH)_2$ | ND | ND | ND | ND |

Tableau 10: teneur en chrome VI dans la marne supragypseuse traitée différents liants selon l'invention (3,5% C12A7 à 98% pureté + 0,6% $Ca(OH)_2$) en fonction de la teneur en chaux dans le liant

| | Teneur en chrome VI (mg/kg MS) | | |
|---|---|---|---|
| Durée traitement | 2 heures | 1 jour | 7 jours |
| Témoin (non traité) Marne supragypseuse | ND | ND | ND |
| 0,98% C12A7 (à 85% pureté) + 0,12% $Ca(OH)_2$ | ND | ND | ND |
| 2,65% C12A7 (à 85% pureté) + 0,33% $Ca(OH)_2$ | 0,1 | 0,2 | 0,1 |
| 2,6% C12A7 (à 98% pureté) + 0,4% $Ca(OH)_2$ | 0,1 | 0,2 | 0,2 |
| 4,8% C12A7 (à 98% pureté) + 0,79% $Ca(OH)_2$ | ND | ND | 0,1 |
| 4,8% C12A7 (à 98% pureté) + 0,6% $Ca(OH)_2$ | ND | ND | 0,1 |
| 4,8% C12A7 (à 98% pureté) + 0,05% $Ca(OH)_2$ | ND | 0,1 | 0,2 |
| Durée traitement | 2 heures | 1 jour | 7 jours |
| 6,1% C12A7 (à 98% pureté) + 0,92% $Ca(OH)_2$ | ND | ND | ND |
| 8,8% C12A7 (à 98% pureté) + 1,19% $Ca(OH)_2$ | ND | ND | ND |
| 7% C12A7 (à 98% pureté) + 3,4% $Ca(OH)_2$ | ND | ND | ND |

Tableau 11 : teneur en chrome VI dans le limon traité avec un liant selon l'invention (3,5% C12A7 à 98% pureté + 0,6% $Ca(OH)_2$) et comparée à un liant é base de CSA et un liant à base de CEM I

| | Teneur en chrome VI (mg/kg MS) | | | |
|---|---|---|---|---|
| Durée traitement | 2 heures | 1 jour | 7 jours | 2 mois |

(suite)

|  | Teneur en chrome VI (mg/kg MS) | | | |
| --- | --- | --- | --- | --- |
| Témoin (non traité) Limon avec ajout de gypse | ND | ND | ND | ND |
| Comparatif: 6% CEM I + 2,5% Ca(OH)$_2$ | 0,8 | 0,8 | 0,7 | 0,7 |
| Comparatif: 6% CSA + 2,5% Ca(OH)$_2$ | 1,2 | 1,7 | 2,0 | 2,7 |
| Invention: 6% C12A7 (à 98% pureté) + 0,8% Ca(OH)$_2$ | ND | ND | ND | ND |

L'ensemble de ces résultats place le liant de l'invention comme une solution avantageuse et efficace face au problème de lixiviation du chrome VI apporté par les liants traditionnels OPC ou CSA.

**Revendications**

1.   Procédé de traitement de sols pollués, notamment de sols pollués par des anions, tels que des ions sulfate, et/ou des métaux lourds, comprenant le mélange dudit sol avec un liant hydraulique, dans lequel le liant hydraulique comprend :

- A titre de seul clinker alumineux, un clinker alumineux comprenant plus de 80 % massique de phase Mayenite C12A7 ou d'un isotype de Mayenite, ledit clinker alumineux représente au moins 70% en poids du poids du liant hydraulique ;
- De 1 à 30% en poids, par rapport au poids total du liant, de chaux.

2.   Procédé selon la revendication 1, **caractérisé en ce que** le clinker alumineux comprend comme seule phase aluminate la phase Mayenite C12A7.

3.   Procédé selon l'une quelconque des revendications précédentes, **caractérisé en ce que** la chaux est de la chaux libre, de la chaux éteinte, ou un mélange de chaux libre et de chaux éteinte, avantageusement de la chaux éteinte.

4.   Procédé selon l'une quelconque des revendications précédentes, **caractérisé en ce que** le liant hydraulique comprend de 5 à 25% en poids, par rapport au poids total du liant, de chaux vive ou de chaux éteinte.

5.   Procédé selon l'une quelconque des revendications précédentes, **caractérisé en ce qu'**il comprend le mélange dudit sol avec ledit liant hydraulique dans des proportions massiques sol/liant comprises entre 1 et 10 parties de liant pour 100 parties de sol.

6.   Utilisation du procédé selon l'une quelconque des revendications précédentes pour la stabilisation de sols *in situ* ou avant mise en stockage, de sols pollués notamment par des anions sulfate et/ou des cations de métaux lourds.

**Patentansprüche**

1.   Verfahren zur Behandlung verunreinigter Böden, insbesondere von Böden, die durch Anionen, wie beispielsweise Sulfationen, und/oder Schwermetalle verunreinigt sind, das das Mischen des Bodens mit einem hydraulischen Bindemittel umfasst, wobei das hydraulische Bindemittel umfasst:

- als einzigen Aluminatklinker einen Aluminatklinker, der über 80 Ma% C12A7-Mayenit-Phase oder von einem Mayenit-Isotop umfasst, wobei der Aluminatklinker mindestens 70 Gew.-% des Gewichts des hydraulischen Bindemittels darstellt;
- von 1 bis 30 Gew.-% Kalk im Verhältnis zum Gesamtgewicht des Bindemittels.

2.   Verfahren nach Anspruch 1, **dadurch gekennzeichnet, dass** der Aluminatklinker als einzige Aluminatphase die C12A7-Mayenit-Phase umfasst.

3. Verfahren nach einem der vorhergehenden Ansprüche, **dadurch gekennzeichnet, dass** der Kalk freier Kalk, gelöschter Kalk oder eine Mischung aus freiem Kalk und gelöschtem Kalk, vorzugsweise gelöschter Kalk, ist.

4. Verfahren nach einem der vorhergehenden Ansprüche, **dadurch gekennzeichnet, dass** das hydraulische Bindemittel 5 bis 25 Gew.-% gebrannten Kalk oder gelöschten Kalk im Verhältnis zum Gesamtgewicht des Bindemittels umfasst.

5. Verfahren nach einem der vorhergehenden Ansprüche, **dadurch gekennzeichnet, dass** es die Mischung des Bodens mit dem hydraulischen Bindemittel in den Massenverhältnissen Boden/Bindemittel umfasst, die zwischen 1 bis 10 Teilen Bindemittel auf 100 Teile Boden enthalten sind.

6. Verwendung des Verfahrens nach einem der vorhergehenden Ansprüche für die Stabilisierung von Böden vor Ort oder vor der Lagerung, insbesondere von Böden, die mit Sulfatanionen und/oder Kationen von Schwermetallen verunreinigt sind.

## Claims

1. Method for treating polluted soil, notably soil polluted by anions, such as sulfate anions, and/or heavy metals, comprising the mixture of said soil with a hydraulic binder, wherein the hydraulic binder comprises:

   - as the only high-alumina clinker, a high-alumina clinker comprising more than 80 mass% of mayenite C12A7 phase or a mayenite isotope, said high-alumina clinker making up at least 70 wt% of the weight of the hydraulic binder;
   - 1 to 30 wt%, relative to the total weight of the binder, of lime.

2. Method according to claim 1, **characterized in that** the high-alumina clinker comprises mayenite C12A7 phase as the only aluminate phase.

3. Method according to any one of the preceding claims, **characterized in that** the lime is free lime, slaked lime, or a mixture of free lime and slaked lime, advantageously slaked lime.

4. Method according to any one of the preceding claims, **characterized in that** the hydraulic binder comprises 5 to 25 wt% of free lime or slaked lime relative to the total weight of the binder.

5. Method according to any one of the preceding claims, **characterized in that** it comprises the mixture of said soil with the hydraulic binder in soil/binder proportions by mass comprised between 1 and 10 parts of binder for 100 parts of soil.

6. Use of the method according to any one of the preceding claims for the stabilization of soil on site or before storing, notably soils polluted by sulfate anions and/or heavy metal cations.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H10279937 B
- US 20150158063 A
- EP 0588689 A
- US 3826665 A